# FASCICULE DE BREVET EUROPEEN

(11) **EP 0 629 337 B1**
(45) Date de publication et mention de la délivrance du brevet: **01.09.1999**
(21) Numéro de dépôt: 94440040.7
(22) Date de dépôt: 14.06.1994
(51) Int. Cl.: A01C 7/20, A01B 49/06

(54) **Semoir comportant un limiteur de profondeur de son dispositif d'implantation de semence dans le sol et machine agricole combinée de travail du sol et de semis utilisant un tel semoir**
Sämaschine mit einer Vorrichtung zur Begrenzung der Tiefe von Säscharen im Boden, und eine kombinierte Landmaschine bestehend aus einer Bodenbearbeitungsmaschine und eine Sämaschine mit Verwendung einer solcher Sämaschine
Seed drill, comprising a device to limit the depth of the seed implantation device in the soil, and a combined soil working and seed drilling machine using such a seed drill

(30) Priorité: 14.06.1993 FR 9307287
(43) Date de publication de la demande: 21.12.1994
(73) Titulaire: KUHN S.A., F-67700 Saverne (FR)
(72) Inventeur: Oberle, Edmond, F-67700 Haegen (FR)

(56) Documents cités:
- EP-A- 0 445 583
- EP-A- 0 513 939
- DE-A- 4 121 218
- FR-A- 2 560 480
- FR-A- 2 647 626

## Description

La présente invention concerne un semoir comportant :
- un châssis destiné à être lié directement ou indirectement à un véhicule moteur,
- un dispositif d'implantation de semence dans le sol comprenant au moins une structure porteuse s'appuyant sur le sol durant le travail et au moins une conduite d'implantation de semence dans le sol,
- une structure de liaison liant directement ou indirectement le dispositif d'implantation de semence dans le sol au châssis,
   et
- un organe de référence détectant la surface du sol dans le voisinage dudit dispositif d'implantation de semence dans le sol, ledit dispositif d'implantation de semence dans le sol pouvant se déplacer en hauteur indépendamment dudit organe de référence.

Il est connu dans l'état de la technique (FR-A-2 647 626) une machine agricole combinée de travail du sol et de semis, qui comporte une machine de préparation du lit de semence liée à l'attelage trois points arrière d'un tracteur et munie d'un semoir.

La machine de préparation du lit de semence comporte une rangée de socs soulevant une bande de terre à travailler, un rotor s'étendant orthogonalement à la direction d'avance au travail et travaillant ladite bande de terre soulevée, et un rouleau du type "Packer" rappuyant la bande de terre ainsi travaillée. Ce rouleau de rappuyage est lié à la machine de préparation du lit de semence de telle sorte que cette dernière puisse se déplacer quelque peu en hauteur indépendamment dudit rouleau de rappuyage. Elle peut ainsi passer plus facilement par-dessus un éventuel obstacle enfoui dans le sol.

Le semoir, quant à lui, comporte notamment un châssis fixé sur la machine de préparation du lit de semence, un dispositif d'implantation de semence dans le sol s'appuyant sur le sol durant le travail et deux parallélogrammes déformables liant ce dispositif d'implantation audit châssis de sorte que ledit dispositif d'implantation puisse s'adapter au relief du sol. Ce dispositif d'implantation connu comporte un rouleau à lames roulant sur le sol durant le travail, une structure de guidage de ce rouleau à lames fixée aux deux parallélogrammes déformables et une pluralité de conduites d'implantation de semence dans le sol. L'extrémité inférieure de chaque conduite d'implantation s'étend, en vue latérale, dans le volume généré par les lames du rouleau. De ce fait, chaque conduite d'implantation est continuellement nettoyée par les lames lors de la rotation du rouleau. Par ailleurs, chaque conduite d'implantation est articulée à ladite structure de guidage au moyen d'un axe respectif dirigé parallèlement à l'axe de rotation du rouleau et un ressort de traction agit entre chaque conduite d'implantation et ladite structure de guidage. Grâce à un tel agencement, l'extrémité inférieure de chaque conduite d'implantation est maintenue à la profondeur de travail souhaitée à l'aide du ressort, tout en pouvant passer par-dessus un obstacle enfoui dans le sol par pivotement autour dudit axe. Afin de lever le dispositif d'implantation pour le transport, ce semoir connu comporte encore deux tirants de longueur réglable s'étendant entre le châssis du semoir et les parallélogrammes déformables. Ces deux tirants comportent chacun un trou oblong autorisant, durant le travail, l'adaptation du dispositif d'implantation au relief du sol.

Etant donné qu'au travail le rouleau de soutènement et de nettoyage roule sur le sol et peut se déplacer en hauteur pour suivre les dénivellations du sol, la profondeur d'implantation de la semence reste normalement constante. Pourtant, il s'est avéré que dans des sols meubles ou très meubles le rouleau de soutènement et de nettoyage s'enfonçait parfois trop profondément. L'implantation de la semence dans le sol n'est alors plus optimale.

Pour limiter l'enfoncement du rouleau de soutènement et de nettoyage dans des sols meubles ou très meubles, il est certes possible de réduire la longueur des tirants, ce qui supprime le débattement des parallélogrammes vers le bas. Dans ce cas toutefois, la position basse maximale du rouleau de soutènement et de nettoyage et par conséquent la profondeur d'implantation de la semence dans le sol sont directement influencées par les déplacements en hauteur du châssis du semoir au cours desquels les conduites d'implantation de semence dans le sol risquent tout simplement de sortir du sol. La réduction de la longueur des tirants n'assure donc pas non plus une implantation optimale de la semence dans des sols meubles ou très meubles.

On connaît également par l'intermédiaire du document EP-A 0 445 583, une machine agricole combinée qui comporte une machine de préparation du lit de semence destinée à être attelée à l'attelage trois points arrière d'un tracteur, et un semoir lié à ladite machine. Ce semoir comprend :
- un châssis destiné à être lié via la machine de préparation du lit de semence à un tracteur,
- un dispositif d'implantation de semence dans le sol, comprenant une structure porteuse s'appuyant sur le sol durant le travail au moyen d'un rouleau et des conduites d'implantation de semence dans le sol,
   et
- une structure de liaison liant le dispositif d'implantation au châssis.

Des roues décrites constituent un organe de référence détectant la surface du sol dans le voisinage du dispositif d'implantation de semence dans le sol et par rapport auquel le dispositif d'implantation de semence dans le sol peut se déplacer en hauteur.

Une butée solidaire d'un parallélogramme déformable, (structure de liaison), est destinée à venir en appui sur le châssis lorsque la machine combinée est dégagée du sol.

Un inconvénient de la machine décrite dans ce document réside dans le fait qu'elle ne comporte pas de limiteur de profondeur destiné à limiter vers le bas le déplacement du dispositif d'implantation de semence dans le sol à une profondeur d'enfoncement maximale réglable en dessous de la surface du sol détectée par l'organe de référence.

L'état de la technique comprend également le document FR-A-2 560 480. Son enseignement se rapporte à une machine dont le dispositif d'implantation de semence se déplace en hauteur avec un organe de référence. Le dispositif d'implantation de semence est fixé sur l'organe de référence et ne peut donc se déplacer indépendamment en hauteur par rapport audit organe de référence.

Par ailleurs, le document EP-A-0 513 939 décrit une machine combinée pour la préparation du lit de semence et pour le semis. La machine comprend un rouleau du type "Packer" associé à un dispositif d'implantation de semence dans le sol. Ce dernier est ajusté en hauteur par rapport au rouleau à l'aide d'un vérin hydraulique. Un déplacement en hauteur du rouleau entraîne ainsi un déplacement du dispositif d'implantation de semence dans le sol.

La présente invention a pour but de créer un semoir dont le dispositif d'implantation de semence dans le sol, qui peut se déplacer en hauteur durant le travail, permet une bonne implantation de la semence, notamment dans des sols meubles ou très meubles.

A cet effet le semoir selon l'invention qui comporte :
- un châssis destiné à être lié directement ou indirectement à un véhicule moteur,
- un dispositif d'implantation de semence dans le sol comprenant au moins une structure porteuse s'appuyant sur le sol durant le travail et au moins une conduite d'implantation de semence dans le sol,
- une structure de liaison liant directement ou indirectement le dispositif d'implantation de semence dans le sol au châssis,
   et
- un organe de référence détectant la surface du sol dans le voisinage dudit dispositif d'implantation de semence dans le sol, ledit dispositif d'implantation de semence dans le sol pouvant se déplacer en hauteur indépendamment dudit organe de référence, est caractérisé en ce qu'il comporte un limiteur de profondeur destiné à limiter, vers le bas, le déplacement dudit dispositif d'implantation de semence dans le sol à une profondeur maximale réglable en-dessous de la surface du sol détectée par ledit organe de référence.

Etant donné que le semoir selon l'invention comporte un limiteur de profondeur destiné à limiter, vers le bas, le déplacement du dispositif d'implantation de semence dans le sol à une profondeur maximale réglable en-dessous de la surface du sol détectée par l'organe de référence, ledit dispositif d'implantation ne risque pas de s'enfoncer exagérément dans les sols meubles ou très meubles.

En sus, la profondeur maximale d'implantation est au moins sensiblement indépendante des déplacements en hauteur du châssis du semoir par rapport à la surface du sol.

Selon une autre caractéristique, il peut être avantageusement prévu que l'organe de référence s'étende devant le dispositif d'implantation de semence dans le sol. De ce fait, l'organe de référence détecte la surface du lit de semence sur lequel va passer le dispositif d'implantation.

Selon une autre caractéristique, il peut être prévu que le limiteur de profondeur soit destiné à agir entre l'organe de référence et le dispositif d'implantation de semence dans le sol ou la structure de liaison liant ce dernier directement ou indirectement au châssis du semoir.

Par organe de référence, on comprendra l'organe de référence lui-même ou un organe lié rigidement à celui-ci.

Une solution simple peut être obtenue en prévoyant que le limiteur de profondeur comporte une butée destinée à s'appuyer contre l'organe de référence. Ainsi, lorsque le dispositif d'implantation de semence dans le sol aura tendance à s'enfoncer trop profondément dans le sol, la butée viendra en contact avec l'organe de référence au moment où la profondeur d'enfoncement maximale admissible aura été atteinte.

Afin d'obtenir un bon contact entre la butée du limiteur de profondeur et l'organe de référence il peut être avantageusement prévu que le limiteur de profondeur comporte un élément élastiquement déformable. Celui-ci atténuera considérablement les chocs et pourra, selon la réalisation spécifique, autoriser un léger ripage entre les organes en contact.

Il peut également être très avantageux de prévoir que la butée agisse sur l'organe de référence au moins sensiblement à la verticale d'un point de contact entre l'organe de référence et la surface du sol ou, du moins, dans le voisinage d'une droite verticale passant, en vue latérale, par ce point de contact.

Dans une réalisation simple, le limiteur de profondeur peut comporter en sus une console fixée à la structure porteuse du dispositif d'implantation de semence dans le sol et portant la butée.

La butée pourra alors être prévue avantageusement réglable en hauteur par rapport à ladite console.

Il peut également s'avérer avantageux de prévoir que la console comporte des moyens permettant le réglage de la position de la butée au moins sensiblement suivant la direction d'avance au travail et/ou des moyens permettant le réglage de la position de la butée transversalement à la direction d'avance au travail.

Dans l'invention, il peut également être prévu que l'organe de référence comporte un organe roulant sur la surface du sol durant le travail. Dans ce cas, cet organe roulant peut être constitué par un rouleau de rappuyage faisant partie du semoir ou d'une machine de préparation du lit de semence à laquelle est fixé le semoir pour former une machine agricole combinée de travail du sol et de semis.

Dans ce cas notamment, la butée peut comporter au moins un galet roulant directement sur l'organe roulant. Cependant, il sera préférable de prévoir que la butée comporte deux galets roulant directement sur l'organe roulant respectivement devant et derrière la droite verticale passant par un point de contact entre l'organe roulant et le sol. Il sera même préférable qu'en vue suivant l'axe de rotation de l'organe roulant, lesdits galets s'étendent symétriquement par rapport à ladite droite verticale. Pour bien équilibrer les efforts dans ces cas, il est avantageux de prévoir que la butée comporte un levier pivotant articulé en sa partie médiane à un support de sorte à pouvoir pivoter autour d'un axe au moins sensiblement parallèle à l'axe de rotation de l'organe roulant, et coupant au moins sensiblement ladite droite verticale, ce levier pivotant portant un galet à chacune de ses extrémités.

Des outils de nettoyage pourront d'ailleurs être prévus pour nettoyer la surface de l'organe roulant sur laquelle roule(nt) le (les) galet(s).

Il peut également être prévu que la butée ne s'appuie pas directement sur l'organe roulant comme les galets précédents mais, au contraire, sur un longeron s'étendant entre les deux bras latéraux supportant ledit organe roulant. Si ce dernier est un rouleau de rappuyage, ce longeron peut avantageusement s'étendre derrière ledit rouleau de rappuyage et supporter des outils de nettoyage de celui-ci.

Lorsque la structure porteuse du dispositif d'implantation de semence dans le sol supporte plusieurs conduites d'implantation de semence dans le sol et s'étend au moins sensiblement parallèlement audit rouleau de rappuyage et au moins sensiblement sur la même largeur que celui-ci, il est avantageux de prévoir que le limiteur de profondeur comporte deux butées s'appuyant chacune sur le longeron au moins dans le voisinage d'un bras latéral correspondant. La flexion du longeron engendrée par les butées reste ainsi limitée.

L'invention est particulièrement adaptée aux dispositifs d'implantation de semence dans le sol, dont la structure porteuse comporte un élément roulant au moyen duquel elle s'appuie sur le sol durant le travail, lequel élément roulant peut également être destiné à nettoyer les conduites d'implantation de semence dans le sol durant sa rotation. Ce nettoyage peut avantageusement être réalisé par des outils que comporte ledit élément roulant, destinés chacun à passer latéralement à côté de l'une au moins des conduites d'implantation de semence dans le sol. Dans ce cas, le limiteur de profondeur peut aussi contribuer à diminuer les risques de détérioration desdits outils, qui ont été constatés dans l'état de la technique lorsque l'élément roulant s'enfonce trop profondément dans le sol, en particulier quand ces outils sont constitués de lames flexibles.

Dans l'invention, la structure de liaison liant le dispositif d'implantation de semence dans le sol au châssis du semoir peut comporter un dispositif à parallélogrammes déformables dirigés suivant la direction d'avance au travail. Il peut, du reste, être avantageusement prévu que le dispositif d'implantation de semence dans le sol soit lié auxdits parallélogrammes déformables de manière réglable au moins sensiblement suivant la direction d'avance au travail.

L'invention concerne du reste également une machine agricole combinée de travail du sol et de semis comportant une machine de préparation d'un lit de semence et un semoir tel que décrit ci-dessus.

Ladite machine de préparation du lit de semence peut comporter un rouleau de rappuyage lequel peut avantageusement constituer l'organe de référence.

Cette machine de préparation du lit de semence peut également être telle que ses outils de travail du sol puissent se déplacer librement vers le haut par rapport au rouleau de rappuyage.

D'autres caractéristiques de l'invention apparaissent dans la description suivante de deux exemples non limitatifs de réalisation faite en référence au dessin annexé sur lequel :
- la figure 1 représente une vue latérale d'une machine agricole combinée de travail du sol et de semis attelée à un véhicule moteur et comportant un semoir selon l'invention ;
- la figure 2 représente une vue latérale, à une plus grande échelle, d'une partie du semoir et de l'organe de référence de la machine agricole combinée de la figure 1;
- la figure 3 représente une vue de dessus suivant la flèche III de la figure 2, de la partie du semoir et de l'organe de référence représentée sur la figure 2 ;
   et
- la figure 4 est une vue comparable à celle de la figure 2 d'un autre exemple de réalisation selon l'invention.

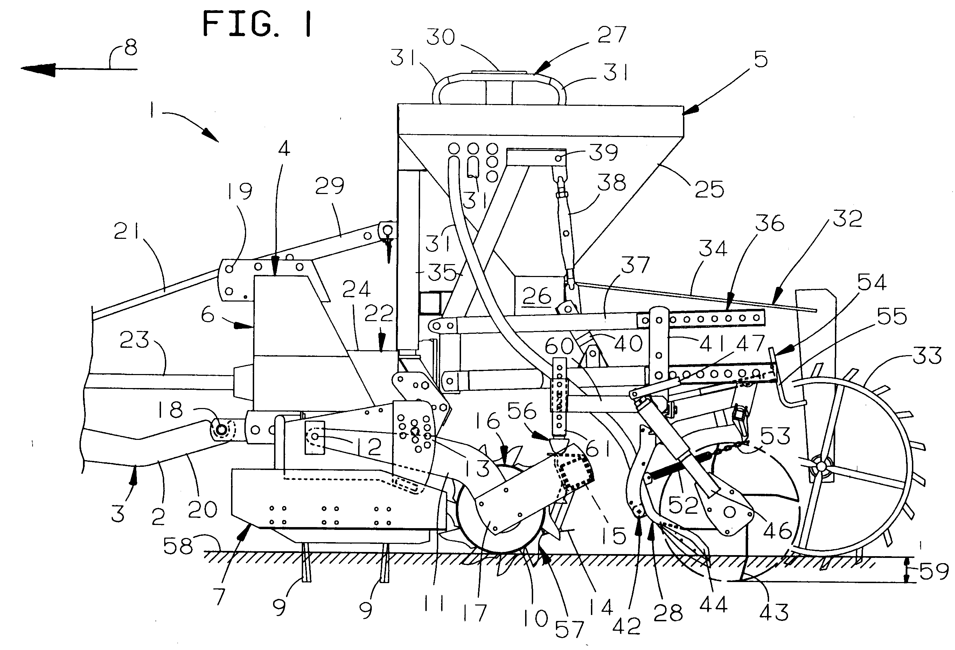

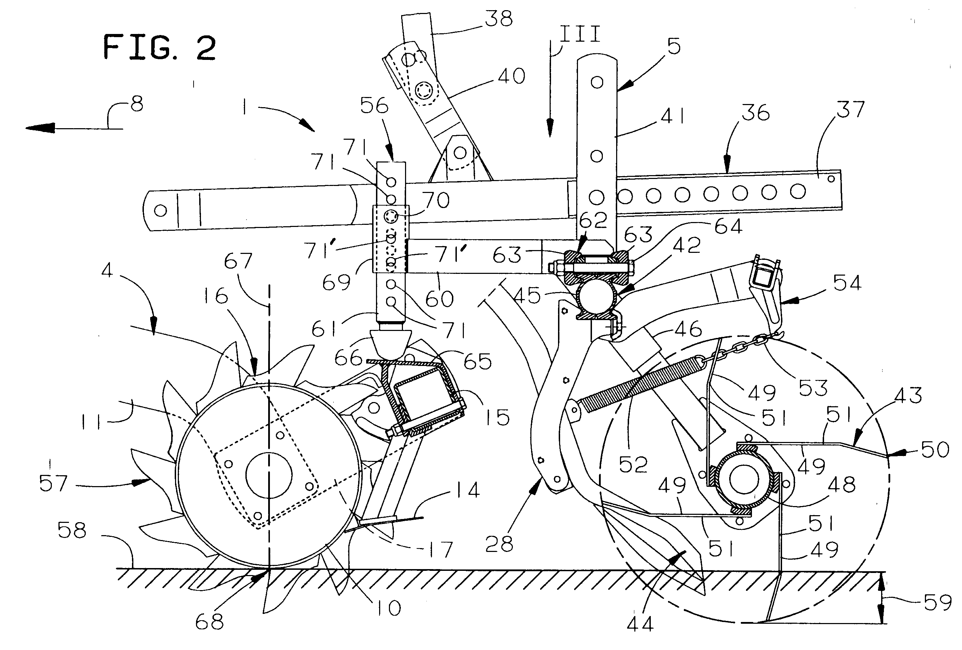

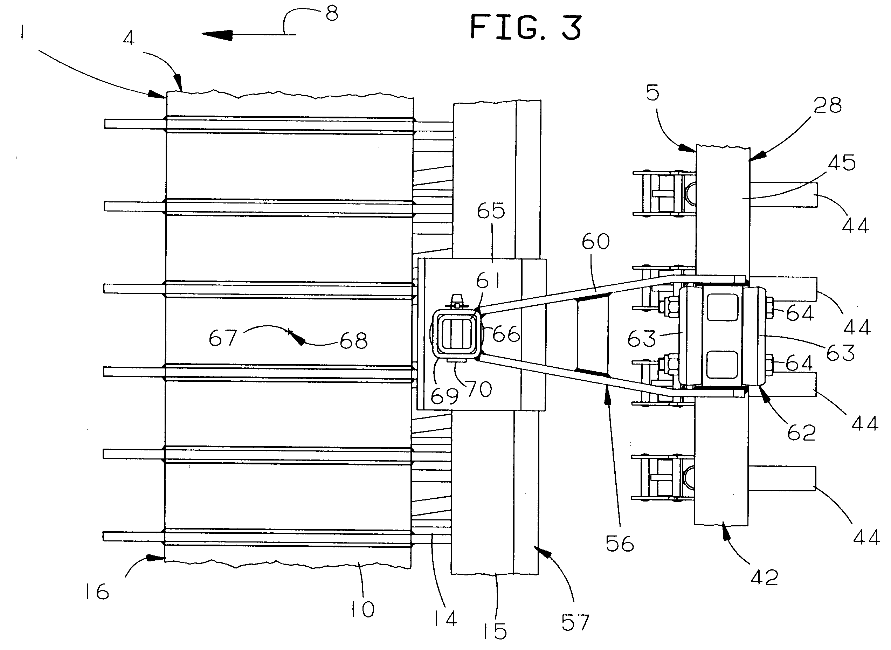

Sur les figures 1 à 3 apparaît une machine agricole combinée de travail du sol et de semis (1) liée à l'attelage arrière (2) d'un tracteur agricole (3). Celle-ci comprend une machine de préparation d'un lit de semence (4) et un semoir (5).

La machine de préparation du lit de semence (4) comporte un châssis (6) supportant une poutre support (7) qui s'étend transversalement à la direction de travail (8). Sous la poutre support (7) s'étendent des outils de travail du sol (9) liés à des rotors (non représentés) qui sont guidés en rotation dans la poutre support (7), de sorte à pouvoir tourner autour d'axes respectifs dirigés vers le haut.

La machine de préparation du lit de semence (4) est également équipée d'un rouleau de rappuyage (10) implanté derrière lesdits rotors (non représentés) de sorte que son axe de rotation s'étende au moins sensiblement orthogonalement à la direction de travail (8). Ce rouleau de rappuyage (10), du type "Packer" dans l'exemple représenté, est guidé en rotation entres les extrémités arrière de deux bras (11) liés chacun à son extrémité avant à la poutre support (7) au moyen d'une articulation (12) d'axe s'étendant au moins sensiblement parallèlement à l'axe de rotation du rouleau de rappuyage (10). Entre chacun de ces bras (11) et la poutre support (7) est prévu un dispositif de réglage (13) de la profondeur de travail des outils de travail du sol (9). Grâce à ces deux dispositifs de réglage (13) de la profondeur de travail, il est possible de régler la position en hauteur du rouleau de rappuyage (10) par rapport à la poutre support (7). Au travail, le rouleau de rappuyage (10) roule en s'appuyant sur le sol (58) et détermine ainsi la profondeur de travail des outils de travail du sol (9). En sus, le rouleau de rappuyage (10) participe au travail du sol.

Au travail, les dispositifs de réglage (13) de la profondeur de travail limitent le déplacement de ladite poutre support (7) par rapport au rouleau de rappuyage (10) uniquement vers le bas. Grâce à cette caractéristique la poutre support (7) de la machine de préparation du lit de semence (4) peut se déplacer provisoirement vers le haut lorsque les outils de travail du sol (9) rencontrent un obstacle enfoui dans le sol alors que le rouleau de rappuyage (10) continue à rouler sur le sol (58).

Le nettoyage du rouleau de rappuyage (10) est réalisé à l'aide d'une pluralité d'outils de nettoyage (14) fixés à un longeron support (15). Ce longeron support (15) s'étend au moins sensiblement parallèlement au rouleau de rappuyage (10) et dans le voisinage arrière de sa partie supérieure (16). A chacune de ses extrémités longitudinales, le longeron support (15) est lié rigidement aux bras (11) dudit rouleau de rappuyage (10) au moyen d'une paroi latérale (17) correspondante. Celle-ci est fixée au bras (11) dans le voisinage de l'axe de rotation du rouleau de rappuyage (10) et assure un positionnement précis des outils de nettoyage (14) par rapport audit rouleau de rappuyage (10).

Le châssis (6) comporte deux points d'attelage inférieurs (18) et un point d'attelage supérieur (19) prévus pour l'accouplement de la machine agricole combinée de travail du sol et de semis (1) à l'attelage trois points arrière (2) du tracteur agricole (3) (sur la figure 1, on n'a représenté que les barres (20, 21) dudit attelage (2)).

L'entraînement en rotation des outils de travail du sol (9) est réalisé par des moyens d'entraînement (22) recevant eux-mêmes le mouvement de l'arbre de prise de force (non représenté) du tracteur agricole (3) au moyen d'un arbre de transmission à joints universels (23). Ces moyens d'entraînement (22) sont connus de l'homme de l'art et comportent notamment un carter central de renvoi (24) qui pourra avantageusement être réalisé sous forme de boîte de vitesses. Il comporte d'une part un arbre de sortie (non représenté) pénétrant dans la poutre support (7) pour entraîner de manière connue les rotors (non représentés) et les outils de travail du sol (9) équipant ces derniers, et d'autre part un arbre de sortie arrière (non représenté) servant à entraîner le semoir (5) via des moyens d'entraînement non représentés mais également connus de l'homme de l'art.

Le semoir (5), quant à lui, comporte une trémie (25) dans laquelle se trouve la semence à implanter dans le lit de semence préparé par la machine de préparation du lit de semence (4). A la base de la trémie (25) est prévu un dispositif (26) de dosage de la semence à la sortie duquel la semence est transportée par un dispositif (27) de distribution et de véhiculage jusqu'à un dispositif (28) d'implantation de la semence dans le sol, qui sera décrit ci-après plus en détail.

Dans l'exemple représenté, le semoir (5) est porté par la machine de préparation du lit de semence (4). A cet effet, le châssis (6) de celle-ci est doté d'une structure d'attelage (29) à laquelle est attelé le semoir (5) de sorte que le châssis (35) du semoir (5) soit fixé au châssis (6) de la machine de préparation du lit de semence (4).

Ce semoir (5) est un semoir pneumatique. A cet effet, son dispositif (27) de distribution et de véhiculage comporte notamment une turbine (non représentée), une tête de distribution (30) et des tuyaux (31). La turbine crée le courant d'air qui véhicule la semence jusqu'à son implantation dans le sol. L'entraînement en rotation de la turbine est réalisé à partir des moyens d'entraînement évoqués ci-dessus.

Le système d'entraînement (32) du dispositif (26) de dosage est constitué d'une roue (33) roulant sur le sol (58) et d'organes de transmission (34) transmettant le mouvement de rotation de la roue (33) au dispositif (26) de dosage.

Sur la figure 1, il apparaît aussi que le dispositif (28) d'implantation de la semence dans le sol est lié au châssis (35) du semoir (5) au moyen d'une structure de liaison (36). Celle-ci comporte deux parallélogrammes (37) déformables dans un plan au moins sensiblement vertical (en fait, sur la figure 1, ces deux parallélogrammes (37) se superposent de sorte qu'on n'en voit qu'un seul). Ladite structure de liaison (36) comporte également un tirant (38) de longueur réglable implanté entre chaque parallélogramme (37) et le châssis (35). Chaque tirant (38) est lié d'une part au châssis (35) au moyen d'une articulation (39) et d'autre part au parallélogramme (37) respectif au moyen d'une genouillère (40). De cette sorte, les deux tirants (38) qui sont destinés à maintenir le dispositif (28) d'implantation de semence dans le sol lors du transport, ne gênent pas l'adaptation du dispositif (28) d'implantation de la semence dans le sol à la configuration du sol (58).

Le dispositif (28) d'implantation de la semence dans le sol peut aussi être approché ou éloigné du châssis (35) du semoir (5) suivant la direction de travail (8). Ceci permet d'amener le dispositif (28) d'implantation de la semence dans le sol dans le proche voisinage du rouleau de rappuyage (10) quelle que soit la machine de préparation du lit de semence (4) utilisée. En effet, selon la machine de préparation du lit de semence (4) utilisée, le rouleau de rappuyage (10) s'étend plus ou moins près du châssis (6) de celle-ci. Dans l'exemple représenté, chaque parallélogramme déformable (37) comporte à cet effet un côté (41) déplaçable par rapport au reste du parallélogramme (37) suivant la direction d'avance (8) au travail et fixé au dispositif (28) d'implantation de semence dans le sol.

Le dispositif (28) d'implantation de semence dans le sol équipant le semoir (5) se compose dans les grandes lignes d'une structure porteuse (42), d'un rouleau (43) et d'une rangée de conduites (44) de guidage et d'implantation de la semence dans le sol.

La structure porteuse (42) comporte tout d'abord une traverse tubulaire (45) dont l'axe longitudinal s'étend au moins sensiblement horizontalement et orthogonalement à la direction d'avance (8) au travail. A chacune de ses extrémités, cette traverse tubulaire (45) est munie d'une console (46) qui s'étend vers le bas et quelque peu vers l'arrière compte tenu du sens d'avance (8) au travail. Entre les extrémités libres de ces consoles (46) est guidé en rotation le rouleau (43) dont l'axe longitudinal de rotation est ainsi dirigé au moins sensiblement orthogonalement à la direction d'avance (8) au travail. De cette sorte, l'axe longitudinal de rotation du rouleau (43) est au moins sensiblement parallèle à l'axe longitudinal de la traverse tubulaire (45) de la structure porteuse (42) et à l'axe longitudinal de rotation du rouleau de rappuyage (10). Dans chaque console (46) est prévu un dispositif (47) à vis et écrou permettant de déplacer le rouleau (43) en hauteur par rapport à ladite structure porteuse (42).

Le rouleau (43) se compose d'un support central (48) et d'un certain nombre d'outils (49) répartis suivant des couronnes (50) radiales et régulièrement espacées le long dudit support central (48). Dans l'exemple représenté, les outils (49) sont des lames flexibles (51).

Le dispositif (28) d'implantation de semence dans le sol comporte également comme dit précédemment, une rangée de conduites (44) de guidage et d'implantation de semence dans le sol. Chaque conduite (44) de guidage et d'implantation de la semence dans le sol est liée individuellement et de manière articulée à la structure porteuse (42) dont la traverse tubulaire (45) s'étend, en vue suivant l'axe longitudinal de rotation du rouleau (43) derrière la partie supérieure desdites conduites (44) et au-dessus dudit rouleau (43). De cette sorte, ladite conduite (44) qui s'étend entre deux couronnes (50) adjacentes du rouleau (43) peut pivoter par rapport à la structure porteuse (42) pour notamment se dégager du sol (58) en cas de rencontre d'un obstacle. Ce pivotement se fait à l'encontre d'un ressort (52) qui est, dans l'exemple représenté, un ressort de traction. Chaque ressort (52) est lié au moyen d'une chaînette (53) à un dispositif (54) de réglage centralisé de la tension des ressorts (52). Pour régler individuellement la force de rappel exercée par chaque ressort (52) sur la conduite (44) respective, il suffit d'accrocher un autre maillon de la chaînette (53) et pour moduler la force de rappel exercée par l'ensemble des ressorts (52) sur leurs conduites (44) respectives, il est prévu d'agir simultanément sur tous les ressorts (52) à l'aide d'une manivelle (55) que comporte le dispositif (54) de réglage centralisé.

Sur les figures 1 à 3, il apparaît aussi que l'enfoncement du rouleau (43) dans le sol (58) peut, selon l'invention, être limité au moyen de deux limiteurs de profondeur (56) limitant, vers le bas, le déplacement dudit dispositif (28) d'implantation de semence dans le sol par rapport à la surface du sol (58) détectée par un organe de référence (57). Dans l'exemple représenté, l'organe de référence (57) comprend le rouleau de rappuyage (10), les deux bras (11), les deux parois latérales (17) et le longeron support (15).

Dans des sols meubles ou très meubles, les limiteurs de profondeur (56) limitent, vers le bas, le déplacement dudit dispositif (28) d'implantation de semence dans le sol à une profondeur maximale (59) réglable et ceci au moins sensiblement indépendamment des déplacements en hauteur du semoir (5) par rapport à la surface du sol (58). En effet, lorsque la machine de préparation du lit de semence (4) se soulève conjointement avec le semoir (5) pour passer par-dessus un obstacle enfoui dans le sol (58), la profondeur maximale (59) d'enfoncement du rouleau (43), qui dépend de l'organe de référence (57) dont le rouleau de rappuyage (10) reste en contact avec le sol (58), ne varie pas (ou du moins dans des proportions négligeables). La profondeur maximale (59) d'enfoncement du rouleau (43) est donc indépendante (ou pratiquement indépendante) du déplacement en hauteur du semoir (5).

Chaque limiteur de profondeur (56) comporte une console (60) et une butée (61). A son extrémité arrière, la console (60) est liée rigidement à la traverse tubulaire (45) au moyen d'un dispositif de guidage (62). Ce dispositif de guidage (62) comporte deux mâchoires (63) qui s'étendent de part et d'autre de la partie supérieure de la traverse tubulaire (45) et qui sont traversées par deux boulons (64). En desserrant légèrement les boulons (64), le dispositif de guidage (62) et la console (60) peuvent être translatés sur la traverse tubulaire (45) suivant l'axe longitudinal de cette dernière. De ce fait, la console (60) et la butée (61) peuvent être aisément positionnées avec précision transversalement à la direction d'avance (8) au travail.

La butée (61), quant à elle, est liée à l'extrémité frontale de la console (60) et est destinée à venir en contact avec l'organe de référence (57). Sur les figures 1 à 3, il apparaît que la butée (61) est destinée à s'appuyer sur le longeron support (15) dudit organe de référence (57). Afin d'obtenir un bon contact entre la butée (61) et le longeron support (15), ce dernier est muni d'un support (65) au moins sensiblement horizontal. La butée (61) comporte, quant à elle, un élément élastiquement déformable (66) destiné à s'appuyer sur ledit support (65). Dans l'exemple représenté, l'organe élastiquement déformable (66) est constitué d'un bloc de caoutchouc ou d'élastomère de forme conique dont le sommet en contact avec le support (65) est arrondi. Cet élément élastiquement déformable (66) permet un contact sans chocs et autorise un léger ripage entre la butée (61) et ledit support (65). Sur les figures 1 à 3, il apparaît du reste que la butée (61) s'appuie sur le support (65) dans le voisinage d'une droite verticale (67) passant, en vue latérale, par un point de contact (68) entre le rouleau de rappuyage (10) et la surface du sol (58). De plus, la butée (61) de chaque limiteur de profondeur (56) est implantée au moins sensiblement dans le voisinage des extrémités longitudinales du longeron support (15). Ceci limite la flexion dudit longeron support (15).

La butée (61) de chaque limiteur de profondeur (56) peut également être réglée en hauteur par rapport à la console (60). A cet effet, la console (60) comporte un fourreau (69) dans lequel est montée la butée (61) de manière à pouvoir être coulissée vers le haut ou vers le bas. Le verrouillage de la butée (61) par rapport au fourreau (69) de la console (60) s'effectue, dans la position choisie, à l'aide d'une broche (70) traversant le fourreau (69) et la butée (61). Un réglage relativement précis de la butée (61) peut être effectué grâce à une pluralité de trous (71, respectivement 71') à entraxes différents prévus dans la butée (61), respectivement dans le fourreau (69) de la console (60). Ainsi, en déplaçant la butée (61) vers le haut par rapport à la console (60), on augmente la profondeur maximale d'enfoncement (59) du rouleau (43). Inversement, en déplaçant la butée (61) vers le bas par rapport à la console (60), on diminue cette profondeur maximale d'enfoncement (59). La profondeur maximale d'enfoncement (59) du rouleau (43) est ainsi aisément réglable.

Par ailleurs, il convient de noter que le limiteur de profondeur (56) n'empêche nullement le rouleau (43) de se déplacer vers le haut par rapport à l'organe de référence (57). Ainsi, lorsque le rouleau (43) rencontre un obstacle, il peut se soulever sans problèmes pour passer par-dessus ledit obstacle.

Le fonctionnement du dispositif (28) d'implantation de semence dans le sol ne sera pas décrit ici. En cas de besoin, on pourra se reporter à la description complète qui en a été faite dans la demande de brevet FR-A-2 647 626.

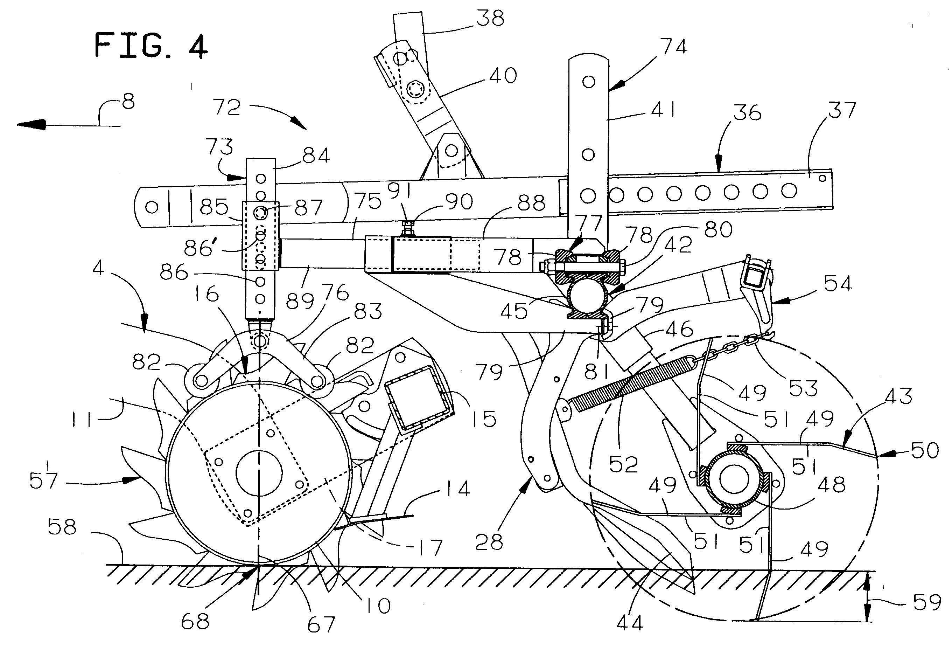

Sur la figure 4, apparaît un autre exemple de réalisation d'une machine agricole combinée de travail du sol et de semis (72). Celle-ci comporte une machine de préparation d'un lit de semence (4) identique à celle qui a été décrite dans l'exemple de réalisation précédent, et un semoir (74) qui diffère du semoir (5) précédent au niveau des deux limiteurs de profondeur (73).

Chaque limiteur de profondeur (73) de ce semoir (74) comporte une console (75) et une butée (76). A son extrémité arrière, la console (75) est liée rigidement à la traverse tubulaire (45) du dispositif (28) d'implantation de semence dans le sol au moyen d'un dispositif de guidage (77). Ce dispositif de guidage (77) comporte deux mâchoires supérieures (78) s'étendant de part et d'autre de la partie supérieure de la traverse tubulaire (45) et deux mâchoires inférieures (79) s'étendant de part et d'autre de la partie inférieure de la traverse tubulaire (45). Les mâchoires supérieures (78), respectivement les mâchoires inférieures (79), sont liées à la traverse tubulaire (45) au moyen d'au moins une vis (80), respectivement (81) (représentée schématiquement). Grâce à cette construction, la console (75) est fixée solidement à la traverse tubulaire (45). En desserrant légèrement les vis (80, 81), le dispositif de guidage (77) et la console (75) peuvent également être translatés sur la traverse tubulaire (45) suivant l'axe longitudinal de cette dernière. Comme dans l'exemple de réalisation précédent, la console (75) et la butée (76) peuvent donc être positionnées avec précision transversalement à la direction d'avance (8) au travail.

Sur la figure 4, il apparaît aussi que la butée (76) est liée à l'extrémité frontale de la console (75) et est destinée à venir en contact avec l'organe de référence (57). La butée (76) comporte deux galets (82) destinés à rouler directement sur le rouleau de rappuyage (10) de telle sorte que, en vue latérale, l'un de ces galets (82) soit positionné devant la droite verticale (67) passant par un point de contact (68) entre le rouleau de rappuyage (10) et le sol (58), et que l'autre galet (82) soit positionné au moins sensiblement symétriquement derrière ladite droite verticale (67). La butée (76) comporte en sus un levier pivotant (83) articulé en sa partie médiane à un support (84) de la butée (76) de sorte à pouvoir pivoter autour d'un axe au moins sensiblement parallèle à l'axe de rotation du rouleau de rappuyage (10) et coupant au moins sensiblement la droite verticale (67). Ce levier pivotant (83) porte un galet (82) à chacune de ses extrémités. Grâce à un tel agencement, les deux galets (82) s'adaptent bien au rouleau de rappuyage (10) de sorte à être correctement en contact avec celui-ci. Les efforts de contact entre la butée (76) et ledit rouleau de rappuyage (10) sont ainsi bien transmis.

La butée (76) de chaque limiteur de profondeur (73) peut également être réglée en hauteur par rapport à la console (75) grâce à un fourreau (85), une pluralité de trous (86, 86') et une broche (87). Vu que ce réglage en hauteur s'effectue de la même manière que celui du limiteur de profondeur (56) précédent, il est inutile de le redécrire.

Sur la figure 4, il apparaît encore que la console (75) comporte deux parties (88, 89): une première partie (88) fixée à la structure porteuse (42) et une deuxième partie (89) pouvant être déplacée par rapport à la première partie (88) au moins sensiblement suivant la direction d'avance (8) au travail et verrouillée dans la position choisie au moyen d'un organe de verrouillage (90) du type vis de pression (91) par exemple. Etant donné que la deuxième partie (89) peut être déplacée par rapport à la première partie (88) au moins sensiblement suivant la direction d'avance (8) au travail, la butée (76) peut être aisément positionnée avec précision suivant ladite direction d'avance (8) au travail.

Finalement, différentes modifications restent possibles notamment en ce qui concerne la constitution des divers éléments ou par substitution d'équivalents techniques, sans pour autant sortir du domaine de protection défini par les revendications.

On comprendra en particulier qu'il est parfaitement possible de prévoir un nombre de butées différent de deux.

On comprendra également que la console (60) du premier exemple de réalisation pourra également comporter deux parties de telle manière que la butée (61) puisse être positionnée suivant la direction d'avance (8) au travail.

On comprendra par ailleurs que le limiteur de profondeur (73) du deuxième exemple de réalisation pourra être équipé d'un organe élastiquement déformable pour atténuer les chocs au niveau du contact entre butée (76) et rouleau de rappuyage (10).

## Revendications

1. Semoir (5 ; 74) comportant :
- un châssis (35) destiné à être lié directement ou indirectement à un véhicule moteur (3),
- un dispositif (28) d'implantation de semence dans le sol comprenant au moins une structure porteuse (42) s'appuyant sur le sol durant le travail et au moins une conduite (44) d'implantation de semence dans le sol,
- une structure de liaison (36) liant directement ou indirectement le dispositif (28) d'implantation de la semence dans le sol au châssis (35),
- un organe de référence (57) détectant la surface du sol (58) dans le voisinage dudit dispositif (28) d'implantation de semence dans le sol, ledit dispositif (28) d'implantation de semence dans le sol pouvant se déplacer en hauteur indépendamment dudit organe de référence (57), et un limiteur de profondeur (56 ; 73) destiné à limiter, vers le bas, le déplacement dudit dispositif (28) d'implantation de semence dans le sol à une profondeur maximale (59) réglable en-dessous de la surface du sol (58) détectée par ledit organe de référence (57), ***caractérisé en ce*** que le limiteur de profondeur (56 ; 73) est destiné à agir entre l'organe de référence (57) et le dispositif (28) d'implantation de semence dans le sol ou la structure de liaison (36) liant ce dernier directement ou indirectement au châssis (35) du semoir (5 ; 74).

2. Semoir selon la revendication 1, ***caractérisé en ce*** que l'organe de référence (57) s'étend devant le dispositif (28) d'implantation de semence dans le sol.

3. Semoir selon la revendication 1 ou 2, ***caractérisé en ce*** que le limiteur de profondeur (56 ; 73) comporte une butée (61 ; 76) destinée à s'appuyer contre l'organe de référence (57).

4. Semoir selon la revendication 3, ***caractérisé en ce*** que le limiteur de profondeur (56) comporte un élément élastiquement déformable (66) permettant d'obtenir un bon contact entre la butée (61) et l'organe de référence (57).

5. Semoir selon la revendication 3 ou 4, ***caractérisé en ce*** que la butée (61 ; 76) agit sur l'organe de référence (57) dans le voisinage d'une droite verticale (67) passant, en vue latérale, par un point de contact (68) entre l'organe de référence (57) et la surface du sol (58).

6. Semoir selon la revendication 5, ***caractérisé en ce*** que la butée (76) agit sur l'organe de référence (57) au moins sensiblement à la verticale dudit point de contact (68).

7. Semoir selon une ou plusieurs des revendications 3 à 6, ***caractérisé en ce*** que le limiteur de profondeur (56 ; 73) comporte en sus une console (60 ; 75) fixée à la structure porteuse (42) du dispositif (28) d'implantation de semence dans le sol et portant la butée (61; 76).

8. Semoir selon la revendication 7, ***caractérisé en ce*** que la butée (61 ; 76) est réglable en hauteur par rapport à ladite console (60 ; 75).

9. Semoir selon la revendication 7 ou 8, ***caractérisé en ce*** que la console (60 ; 75) comporte des moyens (88, 89, 90, 91) permettant le réglage de la position de la butée (76) au moins sensiblement suivant la direction d'avance (8) au travail.

10. Semoir selon une ou plusieurs des revendications 7 à 9, ***caractérisé en ce*** que la console (60 ; 75) comporte des moyens (62 ; 77) permettant le réglage de la position de la butée (61 ; 76) transversalement à la direction d'avance (8) au travail.

11. Semoir selon une ou plusieurs des revendications 1 à 10, ***caractérisé en ce*** que l'organe de référence (57) comporte un organe (10) roulant sur la surface du sol (58) durant le travail.

12. Semoir selon la revendication 11, ***caractérisé en ce*** que l'organe (10) roulant sur la surface du sol (58) durant le travail est un rouleau de rappuyage (10) guidé en rotation entre deux bras latéraux respectifs (11) dudit organe de référence (57).

13. Semoir selon la revendication 11 ou 12 prise en combinaison avec une ou plusieurs des revendications 4 à 11, ***caractérisé en ce*** que la butée (76) comporte au moins un galet (82) roulant directement sur l'organe roulant (10).

14. Semoir selon la revendication 13 et la revendication 7, ***caractérisé en ce*** que la butée (76) comporte deux galets (82) roulant directement sur l'organe roulant (10) respectivement devant et derrière ladite droite verticale (67) passant par ledit point de contact (68).

15. Semoir selon la revendication 14, ***caractérisé en ce*** que les galets (82) s'étendent symétriquement par rapport à ladite droite verticale (67) en vue suivant l'axe de rotation de l'organe (10) roulant sur la surface du sol (58) durant le travail.

16. Semoir selon la revendication 14 ou 15, ***caractérisé en ce*** que la butée (76) comporte en sus un levier pivotant (83) articulé en sa partie médiane à un support (84) de sorte à pouvoir pivoter autour d'un axe au moins sensiblement parallèle à l'axe de rotation de l'organe (10) roulant sur la surface du sol (58) durant le travail, et coupant au moins sensiblement la droite verticale (67), ce levier pivotant (83) portant un galet (82) à chacune de ses extrémités.

17. Semoir selon la revendication 12 prise en combinaison avec une ou plusieurs des revendications 2 à 8, ***caractérisé en ce*** que le rouleau de rappuyage (10) est pourvu d'un longeron (15) s'étendant entre les deux bras latéraux (11) et sur lequel s'appuie la butée (61).

18. Semoir selon la revendication 17, ***caractérisé en ce*** que le longeron (15) s'étend derrière le rouleau de rappuyage (10) et supporte des outils de nettoyage (14) de ce dernier.

19. Semoir selon la revendication 17 ou 18, ***caractérisé en ce*** que la structure porteuse (42) supporte plusieurs conduites (44) d'implantation de semence dans le sol et s'étend au moins sensiblement parallèlement audit rouleau de rappuyage (10) et au moins sensiblement sur la même largeur que celui-ci, et que le limiteur de profondeur (56) comporte deux: butées (61) s'appuyant chacune sur le longeron (15) au moins dans le voisinage d'un bras latéral (11) correspondant.

20. Semoir selon une ou plusieurs des revendications 1 à 19, ***caractérisé en ce*** que la structure porteuse (42) comporte un élément roulant (43) au moyen duquel elle s'appuie sur le sol (58) durant le travail.

21. Semoir selon la revendication 20, ***caractérisé en ce*** que l'élément roulant (43) est également destiné à nettoyer les conduites (44) d'implantation de semence dans le sol durant sa rotation.

22. Semoir selon la revendication 21, ***caractérisé en ce*** que l'élément roulant (43) comporte des outils (49) destinés chacun à passer latéralement à côté de l'une au moins desdites conduites (44) d'implantation de semence dans le sol.

23. Semoir selon une ou plusieurs des revendications 1 à 22, ***caractérisé en ce*** que la structure de liaison (36) comporte un dispositif à parallélogrammes déformables (37) dirigés suivant la direction d'avance (8) au travail.

24. Semoir selon la revendication 23, ***caractérisé en ce*** que le dispositif (28) d'implantation de semence dans le sol est lié aux parallélogrammes déformables (37) de manière réglable au moins sensiblement suivant la direction d'avance (8) au travail.

25. Semoir selon une ou plusieurs des revendications 1 à 24, ***caractérisé en ce*** qu'il comporte un dispositif (25) de stockage de la semence, un dispositif (26) de dosage de la semence et un dispositif (27) de distribution et de véhiculage de la semence depuis le dispositif (26) de dosage de la semence jusqu'au dispositif (28) d'implantation de la semence dans le sol.

26. Machine agricole combinée de travail du sol et de semis (1) comportant une machine de préparation d'un lit de semence (4) et un semoir (5 ; 74), ***carac**t**érisée en ce*** qu'elle utilise un semoir (5 ; 74) selon une ou plusieurs des revendications 1 à 25.

27. Machine agricole combinée de travail du sol et de semis selon la revendication 26, ***caractérisée en ce*** que la machine de préparation du lit de semence (4) comporte un rouleau de rappuyage (10) constituant l'organe de référence (57).

28. Machine agricole combinée de travail du sol et de semis selon la revendication 27, ***caractérisée en ce*** que les outils (9) de travail du sol de la machine de préparation du lit de semence (4) peuvent se déplacer librement vers le haut par rapport au rouleau de rappuyage (10).

## Claims

1. Seed drill (5; 74) comprising:
- a chassis (35) intended to be connected directly or indirectly to a motor vehicle (3),
- a device (28) for planting seeds in the ground, comprising at least one bearing structure (42) resting on the ground during work and at least one pipe (44) for planting seeds in the ground,
- a connecting structure (36) which directly or indirectly connects the device (28) for planting seeds in the ground to the chassis (35),
- a reference member (57) detecting the surface of the ground (58) in the vicinity of the said device (28) for planting seeds in the ground, the said device (28) for planting seeds in the ground being able to move heightwise independently of the said reference member (57), and a depth limiter (56; 73) intended to limit the downwards movement of the said device (28) for planting seeds in the ground to an adjustable maximum depth (59) below the surface of the ground (58) detected by the said reference member (57), ***characterized in*** that the depth limiter (56; 73) is intended to act between the reference member (57) and the device (28) for planting seeds in the ground or the connecting structure (36) connecting the latter directly or indirectly to the chassis (35) of the seed drill (5; 74).

2. Seed drill according to Claim 1, ***characterized in*** that the reference member (57) extends in front of the device (28) for planting seeds in the ground.

3. Seed drill according to Claim 1 or 2, ***characterized in*** that the depth limiter (56; 73) comprises a stop (61; 76) intended to press against the reference member (57).

4. Seed drill according to Claim 3, ***characterized in*** that the depth limiter (56) comprises an elastically deformable element (66) making it possible to obtain good contact between the stop (61) and the reference member (57).

5. Seed drill according to Claim 3 or 4, ***characterized in*** that the stop (61; 76) acts on the reference member (57) in the vicinity of a vertical straight line (67) which, when viewed from the side, passes through a point of contact (68) between the reference member (57) and the surface of the ground (58).

6. Seed drill according to Claim 5, ***characterized in*** that the stop (76) acts on the reference member (57) at least substantially vertically in line with the said point of contact (68).

7. Seed drill according to one or more of Claims 3 to 6, ***characterized in*** that the depth limiter (56; 73) additionally comprises a bracket (60; 75) fixed to the bearing structure (42) of the device (28) for planting seeds in the ground and bearing the stop (61; 76).

8. Seed drill according to Claim 7, ***characterized in*** that the stop (61; 76) is adjustable in height with respect to the said bracket (60; 75).

9. Seed drill according to Claim 7 or 8, ***characterized in*** that the bracket (60; 75) comprises means (88, 89, 90, 91) allowing the position of the stop (76) to be adjusted at least substantially in the direction of forward travel (8) during work.

10. Seed drill according to one or more of Claims 7 to 9, ***characterized in*** that the bracket (60; 75) comprises means (62; 77) allowing the position of the stop (61; 76) to be adjusted transversely to the direction of forward travel (8) during work.

11. Seed drill according to one or more of Claims 1 to 10, ***characterized in*** that the reference member (57) comprises a member (10) rolling along the surface of the ground (58) during work.

12. Seed drill according to Claim 11, ***characterized in*** that the member (10) rolling along the surface of the ground (58) during work is a press roll (10) guided in rotation between two respective lateral arms (11) of the said reference member (57).

13. Seed drill according to Claim 11 or 12 taken in combination with one or more of Claims 4 to 11, ***characterized in*** that the stop (76) comprises at least one roller (82) rolling directly along the rolling member (10).

14. Seed drill according to Claim 13 and Claim 7, ***characterized in*** that the stop (76) comprises two rollers (82) rolling directly along the rolling member (10) respectively in front of and behind the said vertical straight line (67) that passes through the said point of contact (68).

15. Seed drill according to Claim 14, ***characterized in*** that the rollers (82) extend symmetrically with respect to the said vertical straight line (67) when viewed along the axis of rotation of the member (10) that rolls along the surface of the ground (58) during work.

16. Seed drill according to Claim 14 or 15, ***characterized in*** that the stop (76) additionally comprises a pivoting lever (83) articulated at its middle to a support (84) so that it can pivot about an axis that is at least substantially parallel to the axis of rotation of the member (10) that rolls along the surface of the ground (58) during work and at least substantially intersects the vertical straight line (67), this pivoting lever (83) bearing a roller (82) at each of its ends.

17. Seed drill according to Claim 12 taken in combination with one or more of Claims 2 to 8, ***characterized in*** that the press roll (10) is equipped with a stringer (15) extending between the two lateral arms (11) and against which the stop (61) presses.

18. Seed drill according to Claim 17, ***characterized in*** that the stringer (15) extends behind the press roll (10) and supports tools (14) for cleaning this roll.

19. Seed drill according to Claim 17 or 18, ***characterized in*** that the bearing structure (42) supports several pipes (44) for planting seeds in the ground and extends at least substantially parallel to the said press roll (10) and at least substantially across the same width thereas, and that the depth limiter (56) has two stops (61) each pressing against the stringer (15) at least in the vicinity of a corresponding lateral arm (11).

20. Seed drill according to one or more of Claims 1 to 19, ***characterized in*** that the bearing structure (42) comprises a rolling element (43) by means of which it rests on the ground (58) during work.

21. Seed drill according to Claim 20, ***characterized in*** that the rolling element (43) is also intended to clean the pipes (44) for planting seeds in the ground during its rotation.

22. Seed drill according to Claim 21, ***characterized in*** that the rolling element (43) comprises tools (49) each intended to pass laterally to the side of at least one of the said pipes (44) for planting seeds in the ground.

23. Seed drill according to one or more of Claims 1 to 22, ***characterized in*** that the connecting structure (36) comprises a device with deformable parallelograms (37) orientated in the direction of forward travel (8) during work.

24. Seed drill according to Claim 23, ***characterized in*** that the device (28) for planting seeds in the ground is connected to the deformable parallelograms (37) in a manner which is adjustable at least substantially in the direction of forward travel (8) during work.

25. Seed drill according to one or more of Claims 1 to 24, ***characterized in*** that it comprises a device (25) for storing seeds, a device (26) for metering out the seeds and a device (27) for distributing and conveying the seeds from the seed-metering device (26) to the device (28) for planting seeds in the ground.

26. Combined soil-working and seed drilling agricultural machine (1) comprising a machine (4) for preparing a seed bed and a seed drill (5; 74), ***characterized in*** that it uses a seed drill (5; 74) according to one or more of Claims 1 to 25.

27. Combined soil-working and seed drilling agricultural machine according to Claim 26, ***characterized in*** that the machine (4) for preparing the seed bed comprises a press roll (10) that constitutes the reference member (57).

28. Combined soil-working and seed drilling agricultural machine according to Claim 27, ***characterized in*** that the soil-working tools (9) of the machine (4) for preparing the seed bed can move freely upwards with respect to the press roll (10).

## Patentansprüche

1. Sämaschine (5; 74), die
- ein Gestell (35), das direkt oder indirekt mit einem Motorfahrzeug (3) verbunden werden soll,
- eine Vorrichtung (28) zum Einbringen von Samen in den Boden, die mindestens eine Tragkonstruktion (42), die sich während des Betriebs auf den Boden abstützt, und mindestens eine Leitung (44) zum Einbringen von Samen in den Boden aufweist,
- eine Verbindungsvorrichtung (36), die die Vorrichtung (28) zum Einbringen von Samen in den Boden direkt oder indirekt mit dem Gestell (35) verbindet;
- ein Bezugselement (57), das die Oberfläche des Bodens (58) in der Nähe der Vorrichtung (28) zum Einbringen von Samen in den Boden erfaßt, wobei sich die Vorrichtung (28) zum Einbringen von Samen in den Boden unabhängig von dem Bezugselement (57) in der Höhe verschieben kann, und eine Tiefenbegrenzungsvorrichtung (56; 73), die die Bewegung der Vorrichtung (28) zum Einbringen von Samen in den Boden auf eine von dem Bezugselement (57) erfaßte, einstellbare maximale Tiefe (59) unter der Oberfläche des Bodens (58) nach unten begrenzen soll, umfaßt, ***dadurch gekennzeichnet***, daß die Tiefenbegrenzungsvorrichtung (56; 73) zwischen dem Bezugselement (57) und der Vorrichtung (28) zum Einbringen von Samen in den Boden oder der letztere direkt oder indirekt mit dem Gestell (35) der Sämaschine (5; 74) verbindenden Verbindungsvorrichtung (26) wirken soll.

2. Sämaschine nach Anspruch 1, ***dadurch gekennzeichnet***, daß sich das Bezugselement (57) vor der Vorrichtung (28) zum Einbringen von Samen in den Boden erstreckt.

3. Sämaschine nach Anspruch 1 oder 2, ***dadurch gekennzeichnet***, daß die Tiefenbegrenzungsvorrichtung (56; 73) einen Anschlag (61; 76) enthält, der sich auf das Bezugselement (57) stützen soll.

4. Sämaschine nach Anspruch 3, ***dadurch gekennzeichnet,*** daß die Tiefenbegrenzungsvorrichtung (56) ein elastisch verformbares Element (66) aufweist, das ein Erzielen eines guten Kontaktes zwischen dem Anschlag (61) und dem Bezugselement (57) gestattet.

5. Sämaschine nach Anspruch 3 oder 4, ***dadurch gekennzeichnet,*** daß der Anschlag (61; 76) in der Nähe einer vertikalen Geraden (67), die in Seitenansicht durch einen Berührungspunkt (68) zwischen dem Bezugselement (57) und der Oberfläche des Bodens (58) verläuft, auf das Bezugselement (57) einwirkt.

6. Sämaschine nach Anspruch 5, ***dadurch gekennzeichnet,*** daß der Anschlag (76) zumindest im wesentlichen auf der Vertikalen des Berührungspunktes (68) auf das Bezugselement (57) einwirkt.

7. Sämaschine nach einem oder mehreren der Ansprüche 3 bis 6, ***dadurch gekennzeichnet,*** daß die Tiefenbegrenzungsvorrichtung (56; 73) des weiteren eine Halterung (60; 75) aufweist, die an der Tragkonstruktion (42) der Vorrichtung (28) zum Einbringen von Samen in den Boden befestigt ist und den Anschlag (61; 76) trägt.

8. Sämaschine nach Anspruch 7, ***dadurch gekennzeichnet,*** daß der Anschlag (61; 76) bezüglich der Halterung (60; 75) in der Höhe verstellbar ist.

9. Sämaschine nach Anspruch 7 oder 8, ***dadurch gekennzeichnet,*** daß die Halterung (60; 75) Mittel (88, 89, 90, 91) aufweist, die die Einstellung der Position des Anschlags (76) zumindest im wesentlichen in Fahrtrichtung (8) im Betrieb gestatten.

10. Sämaschine nach einem oder mehreren der Ansprüche 7 bis 9, ***dadurch gekennzeichnet,*** daß die Halterung (60; 75) Mittel (62; 77) aufweist, die die Einstellung der Position des Anschlags (61; 76) quer zur Fahrtrichtung (8) im Betrieb gestatten.

11. Sämaschine nach einem oder mehreren der Ansprüche 1 bis 10, ***dadurch gekennzeichnet,*** daß das Bezugselement (57) ein im Betrieb über die Oberfläche des Bodens (58) rollendes Glied (10) aufweist.

12. Sämaschine nach Anspruch 11, ***dadurch gekennzeichnet,*** daß es sich bei dem im Betrieb über die Oberfläche des Bodens (58) rollenden Glied (10) um eine Preßwalze (10) handelt, die zwischen zwei jeweiligen seitlichen Armen (11) des Bezugselements (57) drehbar geführt wird.

13. Sämaschine nach Anspruch 11 oder 12 in Kombination mit einem oder mehreren der Ansprüche 4 bis 11, ***dadurch gekennzeichnet,*** daß der Anschlag (76) mindestens eine Rolle (82) aufweist, die direkt auf dem Rollglied (10) rollt.

14. Sämaschine nach Anspruch 13 und Anspruch 7, ***dadurch gekennzeichnet,*** daß der Anschlag (76) zwei Rollen (82) aufweist, die vor bzw. hinter der vertikalen Geraden (67), die durch den Berührungspunkt (68) verläuft, direkt auf dem Rollglied (10) rollen.

15. Sämaschine nach Anspruch 14, ***dadurch gekennzeichnet,*** daß sich die Rollen (82) mit Blickrichtung entlang der Drehachse des im Betrieb auf der Oberfläche des Bodens (58) rollenden Glieds (10) symmetrisch zur vertikalen Geraden (67) erstrecken.

16. Sämaschine nach Anspruch 14 oder 15, ***dadurch gekennzeichnet,*** daß der Anschlag (76) des weiteren einen Schwenkhebel (83) aufweist, der an seinem mittleren Teil derart an einer Stütze (84) angelenkt ist, daß er um eine zumindest im wesentlichen parallel zur Drehachse des im Betrieb über die Oberfläche des Bodens (58) rollenden Glieds (10) verlaufende und die vertikale Gerade (67) zumindest im wesentlichen schneidende Achse schwenken kann, wobei dieser Schwehkhebel (83) an jedem seiner Enden eine Rolle (82) trägt.

17. Sämaschine nach Anspruch 12 in Kombination mit einem oder mehreren der Ansprüche 2 bis 8, ***dadurch gekennzeichnet,*** daß die Preßwalze (10) mit einem Längsträger (15) versehen ist, der sich zwischen den beiden seitlichen Armen (11) erstreckt und an dem der Anschlag (61) zur Anlage kommt.

18. Sämaschine nach Anspruch 17, ***dadurch gekennzeichnet,*** daß sich der Längsträger (15) hinter der Preßwalze (10) erstreckt und Werkzeuge (14) zur Reinigung letzterer stützt.

19. Sämaschine nach Anspruch 17 oder 18, ***dadurch gekennzeichnet,*** daß die Tragkonstruktion (42) mehrere Leitungen (44) zum Einbringen von Samen in den Boden stützt und sich zumindest im wesentlichen parallel zu der Preßwalze (10) und zumindest im wesentlichen über die gleiche Breite wie diese erstreckt, und daß die Tiefenbegrenzungsvorrichtung (56) zwei Anschläge (61) aufweist, die sich jeweils zumindest in der Nähe eines dazugehörigen seitlichen Arms (11) an den Längsträger (15) stützen.

20. Sämaschine nach einem oder mehreren der Ansprüche 1 bis 19, ***dadurch gekennzeichnet,*** daß die Tragkonstruktion (42) ein Rollelement (43) aufweist, mittels dessen sie sich im Betrieb auf den Boden (58) abstützt.

21. Sämaschine nach Anspruch 20, ***dadurch gekennzeichnet,*** daß das Rollelement (43) während seiner Drehung ebenfalls zur Reinigung der Leitungen (44) zum Einbringen von Samen in den Boden bestimmt ist.

22. Sämaschine nach Anspruch 21, ***dadurch gekennzeichnet,*** daß das Rollelement (43) Werkzeuge (49) aufweist, die jeweils seitlich neben mindestens einer der Leitungen (44) zum Einbringen von Samen in den Boden passieren sollen.

23. Sämaschine nach einem oder mehreren der Ansprüche 1 bis 22, ***dadurch gekennzeichnet,*** daß die Verbindungsvorrichtung (36) eine mit verformbare Parallelogramme (37), die im Betrieb in Fahrtrichtung (8) ausgerichtet sind, aufweisende Einrichtung aufweist.

24. Sämaschine nach Anspruch 23, ***dadurch gekennzeichnet,*** daß die Vorrichtung (28) zum Einbringen von Samen in den Boden auf verstellbare Weise zumindest im wesentlichen in Fahrtrichtung (8) im Betrieb mit den verformbaren Parallelogrammen (37) verbunden ist.

25. Sämaschine nach einem oder mehreren der Ansprüche 1 bis 24, ***dadurch gekennzeichnet,*** daß sie eine Vorrichtung (25) zur Lagerung des Samens, eine Vorrichtung (26) zur Dosierung des Samens und eine Vorrichtung (27) zur Verteilung und Beförderung des Samens von der Vorrichtung (26) zur Dosierung des Samens bis zur Vorrichtung (28) zum Einbringen des Samens in den Boden aufweist.

26. Kombinierte Landmaschine (1) zur Bodenbearbeitung und zum Säen, die eine Maschine zur Vorbereitung des Saatbettes (4) und eine Sämaschine (5; 74) aufweist, ***dadurch gekennzeichnet,*** daß sie eine Sämaschine (5; 74) nach einem oder mehreren der Ansprüche 1 bis 25 verwendet.

27. Kombinierte Landmaschine zur Bodenbearbeitung und zum Säen nach Anspruch 26, ***dadurch gekennzeichnet,*** daß die Maschine (4) zur Vorbereitung des Saatbettes eine Preßwalze (10) aufweist, die das Bezugselement (57) bildet.

28. Kombinierte Landmaschine zur Bodenbearbeitung und zum Säen nach Anspruch 27, ***dadurch gekennzeichnet,*** daß sich die Bodenbearbeitungswerkzeuge (9) der Maschine (4) zur Vorbereitung des Saatbettes bezüglich der Preßwalze (10) frei in der Höhe verschieben können.
